(19) Europäisches Patentamt / European Patent Office / Office européen des brevets

(11) **EP 4 717 468 A1**

(12) **EUROPEAN PATENT APPLICATION**


(43) Date of publication:
**01.04.2026 Bulletin 2026/14**

(21) Application number: **24203700.0**

(22) Date of filing: **30.09.2024**

(51) International Patent Classification (IPC):
***B60C 1/00*** *(2006.01)* ***C08L 9/06*** *(2006.01)*
***C08L 15/00*** *(2006.01)*

(52) Cooperative Patent Classification (CPC):
(C-Sets available)
**C08L 15/00; B60C 1/00; C08L 9/06;**
C08K 2201/006 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**



(71) Applicant: **Bridgestone Europe NV/SA**
**1930 Zaventem (BE)**

(72) Inventor: **PIETROSANTO, Arianna**
**00128 Rome (IT)**

(74) Representative: **Marks & Clerk LLP**
**15 Fetter Lane**
**London EC4A 1BW (GB)**


(54) **RUBBER COMPOSITION FOR PNEUMATIC TYRE AND PNEUMATIC TYRE PRODUCED THEREFROM**


(57) A rubber composition for a pneumatic tyre comprising a polymer having a low glass transition temperature and a blend of hydrocarbon resins and pneumatic tyre produced therefrom.


EP 4 717 468 A1

(52) Cooperative Patent Classification (CPC): (Cont.)

C-Sets
**C08L 9/06, C08K 3/36, C08K 3/36;**
**C08L 15/00, C08L 9/06, C08K 3/36, C08K 3/36,**
**C08K 3/06**

## Description

### FIELD OF THE INVENTION

The present invention is directed to a rubber composition for a pneumatic tyre, the use of the rubber composition in the manufacture of a pneumatic tyre and pneumatic tyres comprising or prepared from the rubber composition. The pneumatic tyres are suitable for passenger-type motor vehicles.

### BACKGROUND TO THE INVENTION

When designing pneumatic tyres for motor vehicles, there is a need to ensure that the tyres have properties which are well-suited to the intended use by the end-user. It will be appreciated that different end-uses may demand different properties. There may therefore exist a need to maximise certain properties, while ensuring that others are not too greatly compromised. In other words, there may be a need to ensure a desirable balance of certain properties.

For certain end-uses, a pneumatic tyre should be able to exhibit strong performance across different road conditions. For example, the tyre should exhibit strong wet traction and braking while also exhibiting good dry handling, enabling high performance on both wet and dry surfaces to be achieved. There is therefore a need to strike a desirable balance between wet and dry performance. At the same time, the abrasion resistance of the tyre should remain desirably high.

Owing to the need to balance different properties, manufacturing such a tyre poses a particular challenge for tyre designers. The ingredients, and the amounts and relative ratios thereof, in the rubber composition from which the tyre is produced must be carefully controlled. Accordingly, there remains a need in the art to provide pneumatic tyres which better optimise wet performance, while maintaining desirable levels of other properties such as abrasion resistance and rolling resistance.

### SUMMARY OF THE INVENTION

The present invention relates to rubber compositions comprising a filler system containing a combination of silica-based fillers having different surface areas per unit mass. When present in optimised ratios, these fillers can provide improved properties such as wet braking/grip and abrasion resistance compared to other filler systems.

Viewed from a first aspect, the present invention is directed to a rubber composition comprising:

- a first copolymer of styrene and butadiene (SBR), optionally functionalised;
- optionally a diene elastomer;
- a filler system comprising:
  - a high surface area (HSA) silica having a CTAB surface area of greater than 180 $m^2/g$, wherein the HSA is present in an amount of less than 115 parts per hundred rubber (phr); and,
  - a very low surface area (VLSA) silica having a CTAB surface area of less than 140 $m^2/g$;

  wherein a ratio of the amount of VLSA silica in phr to the amount of the HSA silica in phr is at least 0.05:1.

Viewed from a second aspect, the present invention is directed to a pneumatic tyre comprising the rubber composition of the first aspect.

Viewed from a third aspect, the present invention is directed to a pneumatic tyre prepared from the rubber composition of the first aspect.

Viewed from a fourth aspect, the present invention is directed to a use of the rubber composition of the first aspect in the manufacture of a pneumatic tyre.

Further advantageous features are defined in the dependent claims and the description below.

### DETAILED DESCRIPTION OF THE INVENTION

Silica is commonly included in rubber compositions for pneumatic tyres. The surface area of the silica can affect the microstructure of the rubber compound, in particular its roughness. The present invention is based, in part, on the discovery that adding a lower surface area silica to a silica-containing rubber composition can improve wet braking/grip, while maintaining abrasion resistance, dry handling and rolling resistance properties. Without wishing to be bound by theory, the inventor believes that the lower surface area silica can increase the roughness of the microstructure, which leads to the wet braking/grip improvements. In particular, certain ratios of high surface area silica to low surface area silica

exist that optimise the balance between wet braking/grip, abrasion resistance, dry handling and rolling resistance properties. Furthermore, the inclusion of a lower surface area silica can improve the balance between wet braking/grip and abrasion resistance compared to non-silica fillers.

According to the above, the present invention is directed to a rubber composition comprising:

a first copolymer of styrene and butadiene (SBR), optionally functionalised;
optionally a diene elastomer;
a filler system comprising:

a high surface area (HSA) silica having a CTAB surface area of greater than 180 $m^2/g$, wherein the HSA is present in an amount of less than 115 parts per hundred rubber (phr); and,
a very low surface area (VLSA) silica having a CTAB surface area of less than 140 $m^2/g$;

wherein a ratio of the amount of VLSA silica in phr to the amount of the HSA silica in phr is at least 0.05:1.

The rubber composition of the present invention comprises a filler system. As used herein, the term "filler system" collectively refers to the ingredients in the rubber composition which are conventionally known in the art to be fillers. This filler system comprises (and may consist of) a high surface area (HSA) silica having a CTAB surface area of greater than 180 $m^2/g$ and a very low surface area (VLSA) silica having a CTAB surface area of less than 140 $m^2/g$. As used herein "CTAB" refers to the cetyltrimethylammonium bromide (CTAB) adsorption method, preferably measured by the CTAB method according to ASTM D6845.

The ratio of the amount of VLSA silica to the amount of the HSA silica in the filler system may be particularly important for providing the benefits of the present invention. Accordingly, the ratio may be from 0.10:1 to 0.9:1, more preferably from 0.15:1 to 0.6:1. In certain embodiments the ratio of the amount of VLSA silica to the amount of the HSA silica is 0.27:1 to 0.8:1, more preferably from 0.30:1 to 0.6:1, even more preferably from 0.35:1 to 0.45:1. In certain embodiments, the ratio of the amount of VLSA silica to the amount of the HSA silica is from 0.05:1 to 0.35:1, preferably from 0.1:1 to 0.3:1, more preferably from 0.15:1 to 0.25:1.

The total surface area of silica in the filler system is calculated by summing the product of the amount of each silica in the rubber composition in phr and its CTAB surface area and may be from 15,000 to 30,000 phr $m^2/g$, 19,000 to 27,000 phr $m^2/g$, preferably from 21,000 to 25,000 phr $m^2/g$, for example 21,000, 22,000, 23,000, 24,000, or 25,000 phr m 2/g.

The VLSA silica may be present in an amount of from 5 to 90 phr, preferably from 10 to 60 phr, more preferably from 15 to 55 phr, even more preferably from 20 to 50 phr, for example 20, 25, 30, 35, 40, 45, or 50 phr. The VLSA silica may have a CTAB surface area of from 20 to 135 $m^2/g$, preferably 40 to 120 $m^2/g$, more preferably from 65 to 95 $m^2/g$.

The HSA silica can be present in any phr amount that the skilled person would consider suitable for the rubber compositions of the present invention. For example, it may be present in an amount of less than 115 phr, though it may be present in other amounts. When present in amounts less than 115 phr, it may be present in an amount of from 50 to 114 phr, preferably from 70 to 113 phr, more preferably from 80 to 112 phr, for example 80, 85, 90, 95, 100, 105, 110, or 112 phr. The HSA silica may have a CTAB surface area of from 181 to 250 $m^2/g$, preferably from 185 to 215 $m^2/g$.

In certain embodiments, the VLSA silica has a CTAB surface area of from 40 to 120 $m^2/g$, preferably from 65 to 95 $m^2/g$, and is present in an amount of from 10 to 60 phr, more preferably from 15 to 60 phr, even more preferably from 35 to 50 phr.

In certain embodiments, the HSA silica has a CTAB surface area of from 181 to 250 $m^2/g$, preferably from 185 to 215 $m^2/g$; and is present in an amount of 80 to 114 phr, preferably from 90 to 114 phr.

In certain embodiments, the HSA silica has a CTAB surface area of from 181 to 250$m^2/g$, more preferably from 185 to 215 $m^2/g$ $m^2/g$ and is present in an amount of from 80 to 114 phr, preferably from 90 to 113 phr; and,
wherein the VLSA silica has a CTAB surface area of from 40 to 120 $m^2/g$, more preferably from 65 to 95 $m^2/g$, and is present in an amount of from 10 to 60 phr, more preferably from 15 to 55 phr, even more preferably from 20 to 50 phr.

In certain embodiments, the HSA silica has a CTAB surface area of from 181 to 250 $m^2/g$, more preferably from 185 to 215 $m^2/g$ $m^2/g$ and is present in an amount of from 80 to 114 phr, preferably from 90 to 113 phr;

wherein the VLSA silica has a CTAB surface area of from 40 to 120 $m^2/g$, more preferably from 65 to 95 $m^2/g$, and is present in an amount of from 10 to 60 phr, more preferably from 15 to 55 phr, even more preferably from 20 to 50 phr; and,
wherein a ratio of the amount of VLSA silica to the amount of the HSA silica is from 0.15:1 to 0.9:1, more preferably from 0.27:1 to 0.8:1, more preferably from 0.30:1 to 0.6:1, even more preferably from 0.35:1 to 0.45:1.

The present inventor has discovered that the combination of HSA silica and VLSA silica can provide similar dry handling, rolling resistance and wet braking/grip properties to a rubber composition comprising aluminium hydroxide, but

with improved abrasion resistance. Accordingly, the rubber composition of the present invention may not comprise a non-silica-based inorganic filler, in particular it may not comprise aluminium hydroxide.

Elastomers

The terms "polymer", "copolymer", "elastomer" and rubber may be used interchangeably herein to describe the polymeric base material for the rubber compositions. These elastomers may be, for example, natural rubber, polybutadiene, synthetic polyisoprenes, butadiene copolymers, isoprene copolymers and mixtures thereof. The components of the rubber compositions are provided in parts per hundred rubber (phr), which means parts by weight per hundred parts of elastomer (or of the total elastomers if several elastomers are present). The term "rubber composition" may be used interchangeably with the term "rubber compound".

The first copolymer of styrene and butadiene (abbreviated as first SBR) may be an emulsion SBR or E-SBR (i.e. an SBR prepared by emulsion polymerization) or a solution SBR or S-SBR (i.e. an SBR prepared by solution polymerization). Preferably the first SBR is a solution SBR or S-SBR.

According to the above, the first SBR may be a solution-SBR. The first SBR is a solution SBR (S-SBR) having a glass transition temperature ($T_g$) of from -90°C to -30°C, preferably from -70°C to -45°C, more preferably from -62°C to -52°C, for example - 62°C, -60°C, -58°C, -56°C, -54°C, or-52°C.

The first SBR may be functionalised with one or more functional groups selected from the group consisting of silane, alkoxysilane, aminosilane, silane-containing carboxyl, and silanol groups. Preferably, the first SBR is functionalised with one or more aminosilane groups. The SBR may preferably be functionalised with aminosilane groups having a structure according to Formula (X):

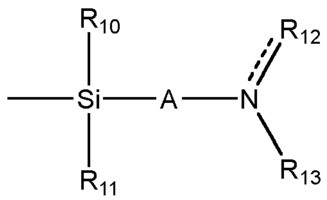

Formula (X)

wherein:

A is a $C_1$-$C_{12}$ alkylene group or a $C_1$-$C_{12}$ alkenylene group;
$R_{10}$ and $R_{11}$ are independently selected from a $C_1$-$C_{12}$ alkyl group, a $C_1$-$C_{12}$ alkenyl group, and a $C_1$-$C_{12}$ alkoxy group;
$R_{12}$ and $R_{13}$ are independently selected from a $C_1$-$C_{12}$ alkyl group, and a $-SiR_{14}R_{15}R_{16}$ group, wherein $R_{14}$, $R_{15}$ and $R_{16}$ are independently selected from a $C_1$-$C_{12}$ alkyl group, a $C_1$-$C_{12}$ alkenyl group, and a $C_1$-$C_{12}$ alkoxy group, or wherein $R_{12}$ and the nitrogen atom to which it is bonded represent a branched or unbranched $C_3$-$C_{12}$ secondary imino group and $R_{13}$ is not present.

Preferably wherein:

A is a $C_1$-$C_{12}$ alkylene group;
$R_{10}$ and $R_{11}$ are independently selected from a $C_1$-$C_{12}$ alkyl group, and a $C_1$-$C_{12}$ alkoxy group;
$R_{12}$ and $R_{13}$ are
a $-SiR_{14}R_{15}R_{16}$ group, wherein $R_{14}$, $R_{15}$ and $R_{16}$ are independently selected from a $C_1$-$C_{12}$ alkyl group, a $C_1$-$C_{12}$ alkenyl group, and a $C_1$-$C_{12}$ alkoxy group, or wherein $R_{12}$ and the nitrogen atom to which it is bonded represent a branched or unbranched $C_3$-$C_{12}$ secondary imino group and $R_{13}$ is not present.

More preferably wherein:

A is a $C_2$-$C_4$ alkylene group;
$R_{10}$ is a $C_1$-$C_4$ alkoxy group and $R_{11}$ is a $C_1$-$C_4$ alkyl group or a $C_1$-$C_4$ alkoxy group, and;
$R_{12}$ and $R_{13}$ are each a $-SiR_{14}R_{15}R_{16}$ group, wherein $R_{14}$, $R_{15}$ and $R_{16}$ are each independently a $C_1$-$C_4$ alkyl group, or wherein $R_{12}$ and the nitrogen atom to which it is bonded represent a branched $C_3$-$C_6$ secondary imino group and $R_{13}$ is not present.

Still more preferably wherein:

A is a $C_2$-$C_4$ alkylene group;
$R_{10}$ is a $C_1$-$C_4$ alkoxy group and $R_{11}$ is a $C_1$-$C_4$ alkyl group or a $C_1$-$C_4$ alkoxy group, and;

$R_{12}$ and $R_{13}$ are each a $-SiR_{14}R_{15}R_{16}$ group, wherein $R_{14}$, $R_{15}$ and $R_{16}$ are a $C_1$-$C_3$ alkyl group, or wherein $R_{12}$ and the nitrogen atom to which it is bonded represent a branched $C_6$ secondary imino group and $R_{13}$ is not present.

It is preferred that the rubber composition further comprises a diene elastomer. The diene elastomer may be one or more selected from the group consisting of natural rubber, polybutadiene rubber, synthetic polyisoprene, butadiene copolymers, isoprene copolymers and mixtures thereof, preferably a second copolymer of styrene and butadiene (SBR). More preferably the rubber composition further comprises an emulsion-SBR.

The second SBR may have a $T_g$ of from -90°C to -30°C, preferably from -70°C to - 45°C, more preferably from -62°C to -52°C, for example -62°C, -60°C, -58°C, -56°C, -54°C, or-52°C.

Preferred embodiments

In certain embodiments, the first SBR is a solution SBR (S-SBR) having a glass transition temperature ($T_g$) of from -90°C to -30°C, functionalised with aminosilane groups, preferably aminosilane groups according to Formula (X);

the rubber composition further comprises a second SBR, preferably an emulsion SBR (e-SBR) having a $T_g$ of from -90°C to -30°C;
wherein the HSA silica has a CTAB surface area of from 181 to 250 $m^2$/g, more preferably from 185 to 215 $m^2$/g $m^2$/g;
wherein the VLSA silica has a CTAB surface area of from 40 to 120 $m^2$/g, more preferably from 65 to 95 $m^2$/g, and is present in an amount of from 10 to 60 phr, more preferably from 15 to 55 phr, even more preferably from 20 to 50 phr; and,
wherein a ratio of the amount of VLSA silica to the amount of the HSA silica is from 0.15:1 to 0.9:1, more preferably from 0.27:1 to 0.8:1, more preferably from 0.30:1 to 0.6:1, even more preferably from 0.35:1 to 0.45:1.

In certain embodiments, the first SBR is a solution SBR (S-SBR) having a glass transition temperature ($T_g$) of from -90°C to -30°C, functionalised with aminosilane groups, preferably aminosilane groups according to Formula (X);

the rubber composition further comprises a second SBR, which is an emulsion SBR (e-SBR) having a $T_g$ of from -90°C to -30°C;
wherein the HSA silica has a CTAB surface area of from 181 to 250 $m^2$/g, more preferably from 185 to 215 $m^2$/g $m^2$/g;
wherein the VLSA silica has a CTAB surface area of from 40 to 120 $m^2$/g, more preferably from 65 to 95 $m^2$/g, and is present in an amount of from 10 to 60 phr, more preferably from 15 to 55 phr, even more preferably from 20 to 50 phr; and,
wherein a ratio of the amount of VLSA silica to the amount of the HSA silica is from 0.15:1 to 0.9:1, more preferably from 0.27:1 to 0.8:1, more preferably from 0.30:1 to 0.6:1, even more preferably from 0.35:1 to 0.45:1.

In certain embodiments, the first SBR is a solution SBR (S-SBR) having a glass transition temperature ($T_g$) of from -90°C to -30°C, functionalised with aminosilane groups, preferably aminosilane groups according to Formula (X);

the rubber composition further comprises a second SBR, preferably an emulsion SBR (e-SBR) having a $T_g$ of from -90°C to -30°C;
wherein the HSA silica has a CTAB surface area of from 181 to 250 $m^2$/g, more preferably from 185 to 215 $m^2$/g $m^2$/g;
wherein the VLSA silica has a CTAB surface area of from 40 to 120 $m^2$/g, more preferably from 65 to 95 $m^2$/g, and is present in an amount of from 10 to 60 phr, more preferably from 15 to 55 phr, even more preferably from 20 to 50 phr; and,
wherein a ratio of the amount of VLSA silica to the amount of the HSA silica is from 0.10:1 to 0.6:1, more preferably from 0.15:1 to 0.6:1.

In certain embodiments, the first SBR is a solution SBR (S-SBR) having a glass transition temperature ($T_g$) of from -90°C to -30°C, functionalised with aminosilane groups, preferably aminosilane groups according to Formula (X);

the rubber composition further comprises a second SBR, which is an emulsion SBR (e-SBR) having a $T_g$ of from -90°C to -30°C;
wherein the HSA silica has a CTAB surface area of from 181 to 250 $m^2$/g, more preferably from 185 to 215 $m^2$/g $m^2$/g;
wherein the VLSA silica has a CTAB surface area of from 40 to 120 $m^2$/g, more preferably from 65 to 95 $m^2$/g, and is present in an amount of from 10 to 60 phr, more preferably from 15 to 55 phr, even more preferably from 20 to 50 phr;

and,

wherein a ratio of the amount of VLSA silica to the amount of the HSA silica is from 0.10:1 to 0.9:1, more preferably from 0.15:1 to 0.6:1.

Additional components

In addition to the components described above, the rubber compositions may comprise additional components that the skilled person would include in order to prepare rubber compositions that are suitable for the preparation of pneumatic tyres. These include, for example, liquid plasticizers, vulcanising agents (such as sulphur), vulcanisation accelerators, vulcanisation accelerator auxiliaries, silane coupling agents, anti-degradation agents (such as antioxidants or anti-ozonants), waxes, and processing agents.

Method of preparation

In preparing the rubber composition of the present invention, the method for combining each of the components is not limited and any of the methods known to the person skilled in the art may be used. For example, all of the component materials may be blended and kneaded at once or they may be blended and kneaded in multiple steps. For blending and kneading, a kneader such as roll kneader, internal mixer, or Banbury mixer may be used. For moulding the rubber composition into sheet or strip shape, any known moulding machine such as extrusion moulding machine or press moulding machine may be used. The vulcanization conditions for hardening the above rubber composition are not limited and can be any of those known to the person skilled in the art. Typically, however, vulcanization conditions of treatment at 140 to 180° C for 5 to 120 minutes are employed.

Pneumatic tyres

In a further aspect, the present invention is directed to pneumatic tyres. The pneumatic tyres are not particularly limited and may be any tyres used on passenger vehicles such as cars, motorbikes, and commercial goods vehicles, for example. The pneumatic tyres may be suited to any type of climate, weather or road conditions and may be, for example, a summer tyre, a winter tyre, a snow tyre, an all-season tyre, a sports tyre, or a high performance tyre.

In view of the above, the present invention is directed to a pneumatic tyre comprising the rubber composition of the present invention and/or a pneumatic tyre prepared from the rubber composition of the present invention.

In a further aspect, the present invention is directed to the use of the rubber composition in the manufacture of a pneumatic tyre.

The part of the tyre in which the rubber composition of the present invention is used is not limited and may be appropriately selected depending on the intended purpose. For example, the rubber composition may be used in the tread, base treads, side walls, side-reinforcing rubbers, bead fillers, etc. Among these, the rubber composition is advantageously used in the tread component.

Regarding the method for producing the tyre, any method known to those skilled in the art can be used. For example, components generally used in tyre production, such as a carcass layer, a belt layer, a tread layer and the like formed of at least one selected from the group consisting of an unvulcanised rubber composition and a cord are layered in order on a drum for tyre formation and then the drum is removed to give a green tyre. Next, the green tyre is vulcanised under heat according to an ordinary method to produce a desired tyre.

The present invention will now be described by the following non-limiting examples.

## EXAMPLES

Methods of measurement

*Glass transition temperature ($T_g$)*

Glass transition temperatures ($T_g$) were measured by DSC (Differential Scanning Calorimetry) according to standard ASTM D3418 (1999).

*Cetyltrimethylammonium bromide (CTAB) adsorption method*

The surface area of the fillers was measured by the CTAB method according to ASTM D6845.

*Loss Factor (tan $\delta$)*

The loss factor (tangent $\delta$, or tan $\delta$) at different temperatures is used to evaluate rolling resistance and wet grip. Tan $\delta$ at lower temperatures (e.g. 0°C) is an indicator of wet grip. Tan $\delta$ at 60°C is an indicator of rolling resistance (RR), wherein a lower tan $\delta$ at 60°C indicates better rolling resistance. Dynamic physical testing to determine tan $\delta$ was conducted in accordance with the ISO 4664 standard.

*Elastic Modulus (E')*

The Elastic Modulus (E') is used to evaluate compound stiffness. Dynamic physical testing to determine E' at 30°C was conducted in accordance with the ISO 4664 standard.

*Weight loss/Wear Energy (abrasion resistance)*

Abrasion resistance is determined by the weight or volume loss of a vulcanized compound as a consequence of its contact with an abrasive roller that is rotated under fixed load in accordance with ISO 4649. A lower level of weight loss divided by the wear energy indicates a higher level of abrasion resistance.

*Friction Test ($\mu$)*

A cured rubber sample is put in contact at controlled load with a wet track. Once in contact with the surface, the sample starts sliding in controlled conditions (3 bar and speed = 1 m/s). The Friction Coefficient of rubber ($\mu$) in the conditions set is determined by the ratio between the sliding force (test output) and the load (test input).

The Friction Coefficient of rubber ($\mu$) in the set conditions is determined by the ratio between the Sliding Friction Force ($F_x$) and the applied vertical load ($F_z$).

$$\mu = \frac{F_x}{F_z}$$

The variation in friction coefficient with time is determined. The Peak of the Friction Coefficient is used to measure the WET braking performance, wherein a higher value indicates better wet braking performance.

*Total surface area of silica*

The total surface area is calculated by summing the product of the amount of each silica in the rubber composition in phr and its CTAB surface area, i.e. CTAB (HSA) x phr (HSA) + CTAB (VLSA) x phr (VLSA) wherein the centre of the reported CTAB range of the commercial silica product is used for the calculation.

General method

Tyre compounds were prepared according to the following general method. The components in Table 1 were compounded in the amounts recited. In preparing the rubber compositions, the method for combining each of the components is not limited and any of the methods known to the person skilled in the art may be used. For example, all of the component materials may be blended and kneaded at once or they may be blending and kneaded in multiple steps. For blending and kneading, a kneader such as roll kneader, internal mixer, or Banbury mixer may be used. For moulding the rubber composition into sheet or strip shape, any known moulding machine such as extrusion moulding machine or press moulding machine may be used. The values in Table 1 are all expressed in phr. All components are commercially available unless otherwise stated.

Table 1

| MATERIAL | Comp. Ex. 1 | Ex. 1 | Ex. 2 | Ex. 3 | Comp. Ex. 2 |
|---|---|---|---|---|---|
| S-SBR (1) | 40 | 40 | 40 | 40 | 40 |
| E-SBR (2) | 60 | 60 | 60 | 60 | 60 |
| TDAE (oil inside ESBR) | 22.5 | 22.5 | 22.5 | 22.5 | 22.5 |
| VLSA (3) | 0.00 | 10.00 | 20.00 | 40.00 | 0.00 |

(continued)

| MATERIAL | Comp. Ex. 1 | Ex. 1 | Ex. 2 | Ex. 3 | Comp. Ex. 2 |
|---|---|---|---|---|---|
| HSA (4) | 115.00 | 111.00 | 107.00 | 100.00 | 111.00 |
| **VLSA:HSA ratio** | **0** | **0.09:1** | **0.19:1** | **0.4:1** | **0** |
| **Total silica surface area (phr $m^2/g$)** | **23,000** | **23,000** | **23,000** | **23,000** | **N/A** |
| Carbon black (5) | 5.00 | 5.00 | 5.00 | 5.00 | 5.00 |
| Aluminium Hydroxide | 0.00 | 0.00 | 0.00 | 0.00 | 40.00 |
| C5 Resin (6) | 50.00 | 50.00 | 50.00 | 50.00 | 50.00 |
| Silane (8) | 10.45 | 10.45 | 10.45 | 10.45 | 10.08 |
| Sulphur | 1.50 | 1.50 | 1.50 | 1.50 | 1.50 |
| DPG (9) | 1.30 | 1.30 | 1.30 | 1.30 | 1.30 |
| TBBS (10) | 2.00 | 2.00 | 2.00 | 2.00 | 2.00 |
| Stearic Acid | 1.00 | 1.00 | 1.00 | 1.00 | 1.00 |
| Zinc Oxide | 2.00 | 2.00 | 2.00 | 2.00 | 2.00 |

1) SSBR (JSR TRADING) Low Tg fxt-sSBR: Sty: 10%; Vinyl (on total): 37%; Tg: -57°C; FxT: Aminosilane
2) Europrene 1723 (Versalis) Oil extended eSBR: 23.5% Styrene, 15% Vinyl, Tg -52°C, 22.5 phr oil (TDAE)
3) Zeosil 1085GR (Solvay) VLSA-SiO2 (Very Low Surface Area) characterized by: CTAB = 65-95 $m^2/g$; NSA = 70-110 $m^2/g$.
4) U9100GR (Evonik) HSA-SiO2 (High Surface Area) characterized by: CTAB =185-215 $m^2/g$; NSA = 215-255 $m^2/g$.
5) Carbon black N234
6) C5 resin having a $T_g$ of 69-79°C (Eastman IMPERA E1780)
7) Residual Aromatic Extract oil (Repsol Extensoil 14)
8) Evonik Industries AG Si 69®
9) 1,3-diphenyl guanidine
10) *N-tert*-butyl-benzothiazole sulphonamide

Table 2 shows measurements of various mechanical properties performed on test pieces of tyre tread prepared using the compositions of Table 1.

Table 2

| Parameter | Comp. Ex. 1 | Ex. 1 | Ex. 2 | Comp. Ex. 2 |
|---|---|---|---|---|
| **E' (30°) (MPa)** | 9.8 | 9.5 | 10.5 | 10.7 |
| **tan Delta 60°C** | 0.263 | 0.252 | 0.254 | 0.269 |
| **MASS LOSS/WEAR ENERGY** | 0.058 | 0.064 | 0.057 | 0.086 |
| **μ by friction (normalised)** | 100 | 102 | 103 | 105 |

The data in Table 2 show that adding a lower surface area silica to a silica-containing rubber composition in certain ratios improves wet braking/grip, while maintaining abrasion resistance, dry handling and rolling resistance properties. Compared to a composition comprising aluminium hydroxide, i.e. a non-silica filler, the compositions of the present invention provide improved balance between wet braking/grip and abrasion resistance.

## Claims

**1.** A rubber composition comprising:

a first copolymer of styrene and butadiene (SBR), optionally functionalised;
optionally a diene elastomer;
a filler system comprising:

a high surface area (HSA) silica having a CTAB surface area of greater than 180 $m^2/g$, wherein the HSA is present in an amount of less than 115 parts per hundred rubber (phr); and,
a very low surface area (VLSA) silica having a CTAB surface area of less than 140 $m^2/g$;

wherein a ratio of the amount of VLSA silica in phr to the amount of the HSA silica in phr is at least 0.05:1.

**2.** The rubber composition according to claim 1, wherein the ratio of the amount of VLSA silica to the amount of the HSA silica is from 0.10:1 to 0.9:1, preferably from 0.15:1 to 0.6:1.

**3.** The rubber composition according to claim 1 or 2, wherein the ratio of the amount of VLSA silica in phr to the amount of the HSA silica in phr is from 0.27:1 to 0.8:1, more preferably from 0.30:1 to 0.6:1, even more preferably from 0.35:1 to 0.45:1.

**4.** The rubber composition according to any one of the preceding claims, wherein the VLSA silica is present in an amount of from 5 to 70 phr, preferably from 10 to 60 phr, more preferably from 15 to 55 phr, even more preferably from 20 to 50 phr.

**5.** The rubber composition according to any one of the preceding claims, wherein the VLSA silica has a CTAB surface area of from 20 to 135 $m^2/g$, preferably 40 to 120 $m^2/g$, more preferably from 65 to 95 $m^2/g$.

**6.** The rubber composition according to any one of the preceding claims, wherein the HSA silica is present in an amount of from 50 to 114 phr, preferably from 70 to 113 phr, more preferably from 80 to 112 phr.

**7.** The rubber composition according to any one of the preceding claims, wherein the HSA silica has a CTAB surface area of from 181 to 250 $m^2/g$, preferably from 185 to 215 $m^2/g$.

**8.** The rubber composition according to any one of the preceding claims, wherein the VLSA silica has a CTAB surface area of from 40 to 120 $m^2/g$, preferably from 65 to 95 $m^2/g$, and is present in an amount of from 10 to 60 phr, more preferably from 15 to 55 phr, even more preferably from 20 to 50 phr.

**9.** The rubber composition according to any one of the preceding claims, wherein the HSA silica has a CTAB surface area of from 181 to 250 $m^2/g$, preferably from 185 to 215 $m^2/g$; and is present in an amount of 80 to 114 phr, preferably from 90 to 114 phr.

**10.** The rubber composition according to any one of the preceding claims, wherein the HSA silica has a CTAB surface area of from 181 to 250 $m^2/g$, more preferably from 185 to 215 $m^2/g$ $m^2/g$ and is present in an amount of from 80 to 114 phr, preferably from 90 to 113 phr;

wherein the VLSA silica has a CTAB surface area of from 40 to 120 $m^2/g$, more preferably from 65 to 95 $m^2/g$, and is present in an amount of from 10 to 60 phr, more preferably from 15 to 55 phr, even more preferably from 20 to 50 phr; and,
wherein a ratio of the amount of VLSA silica in phr to the amount of the HSA silica in phr is from 0.10:1 to 0.9:1, preferably from 0.15:1 to 0.6:1; optionally, from 0.27:1 to 0.8:1.

**11.** The rubber composition according to any one of the preceding claims, wherein the first SBR is a solution SBR (S-SBR) having a glass transition temperature ($T_g$) of from -90°C to -30°C, preferably from -70°C to -45°C, more preferably from -62°C to - 52°C.

**12.** The rubber composition according to any one of the preceding claims, wherein the rubber composition further comprises a diene elastomer which is a second copolymer of styrene and butadiene (SBR), which is optionally functionalised.

**13.** The rubber composition according to any one of the preceding claims, wherein the second SBR has a $T_g$ of from -90°C to -30°C, preferably from -70°C to -45°C, more preferably from -62°C to -52°C.

**14.** A pneumatic tyre comprising or prepared from the rubber composition according to any one of the claims 1 to 13.

**15.** Use of the rubber composition according to any one of claims 1 to 13 in the manufacture of a pneumatic tyre.

Europäisches Patentamt
European Patent Office
Office européen des brevets

# EUROPEAN SEARCH REPORT

Application Number
EP 24 20 3700

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 511 334 B1 (SUMITOMO RUBBER IND [JP]) 25 April 2018 (2018-04-25)<br>* example 3; table 1 *<br>----- | 1-8,14, 15 | INV.<br>B60C1/00<br>C08L9/06<br>C08L15/00 |
| E | EP 4 438 323 A1 (BRIDGESTONE EUROPE NV SA [BE]) 2 October 2024 (2024-10-02)<br>* example comparative 1 and 7; table 1 *<br>----- | 1-15 | |

TECHNICAL FIELDS SEARCHED (IPC)

C08K
B60C
C08L

The present search report has been drawn up for all claims

1

| Place of search | Date of completion of the search | Examiner |
|---|---|---|
| Munich | 7 February 2025 | Laïb, Samia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 20 3700

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2025

| Patent document cited in search report | Publication date | Patent family member(s) | Publication date |
|---|---|---|---|
| EP 2511334 B1 | 25-04-2018 | EP 2511334 A1 | 17-10-2012 |
| | | JP 4875757 B2 | 15-02-2012 |
| | | JP 2011144239 A | 28-07-2011 |
| | | KR 20120115227 A | 17-10-2012 |
| | | US 2012283354 A1 | 08-11-2012 |
| | | WO 2011087004 A1 | 21-07-2011 |
| EP 4438323 A1 | 02-10-2024 | EP 4438323 A1 | 02-10-2024 |
| | | WO 2024199984 A1 | 03-10-2024 |

EPO FORM P0459

For more details about this annex : see Official Journal of the European Patent Office, No. 12/82